(19) Europäisches Patentamt

European Patent Office

Office européen des brevets

(11) **EP 0 961 255 A1**

(12) **EUROPEAN PATENT APPLICATION**

(43) Date of publication:
01.12.1999 Bulletin 1999/48

(51) Int Cl.$^6$: **G09B 9/32**, G02B 27/18

(21) Application number: 98201745.1

(22) Date of filing: 26.05.1998

(84) Designated Contracting States:
**AT BE CH CY DE DK ES FI FR GB GR IE IT LI LU MC NL PT SE**
Designated Extension States:
**AL LT LV MK RO SI**

(71) Applicant: **THE SECRETARY OF STATE FOR DEFENCE**
**Farnborough, Hampshire GU14 0LX (GB)**

(72) Inventor: **Packwood, Russell John**
**Dera Bedford, Bedfordshire, MK41 6AE (GB)**

(74) Representative: **Riddle, Norman Arthur et al**
**D/IPD (DERA) Formalities,**
**A4 Building,**
**Rm G016,**
**Ively Road**
**Farnborough, Hants. GU14 0LX (GB)**

(54) **Collimated display system**

(57)     A display system unit comprising an essentially flat display panel, a beamsplitter, and a concave mirror, all arranged such that the beamsplitter reflects light from the panel onto the mirror, the mirror reflecting and collimating such light to form a collimated image visible to an observer. A plurality of such units can be arranged such that light from each panel is reflected from the respective concave mirrors such that they form discrete, collimated images visible to the observer. Preferably a single common concave mirror is utilised for collimating and reflecting light from a plurality of panels and the line of sight between at least one of the panels and the observer is substantially in the same plane as the panel, thus limiting the obstruction within the field of view.

Fig.3.

Printed by Jouve, 75001 PARIS (FR)

## Description

The invention relates to the projection of images to an observer and is therefore applicable to a display systems suitable for flight simulators. However, it is not limited to such applications but can be utilised for any system in which images are to be presented to an observer, and has utility in the leisure and entertainment field.

Flight simulators have been developed over a number of years to assist in pilot training. Common to many flight simulators is the need for a display system whose function is to present a lifelike moving scene of the virtual world to the observer i.e. the view which the pilot would see outside his cockpit. It is desirable for such a display to have a large field of view.

A basic form of display system for such a simulator may comprise a single cathode ray tube (CRT) whereby a raster scan forms an image on the CRT screen. The control of the raster scan and therefore the image is performed by an image generator. Computer based image generators are common to all modern flight simulators and essentially their function is to generate image data which is provided to the display system. Because of the inherent practical limitations of controlling a raster scan over a large area, a single CRT is limited in size; and in any case the required field of view is much larger than can be provided by a single CRT.

Certain existing simulators include a display system comprising a number of adjacent stacked CRT's where each CRT displays a segment or "tile" portion of the field of view. By mosaicing the CRT's together a large matched image is formed from a number of discrete images. Such a system is however far from ideal, mainly because the image is inevitably discontinuous. Additionally, there is no feeling of depth to the observer and the number of CRT's required causes problems by virtue of their weight and bulk.

Another alternative method of increasing the field of view has been to utilise a number of projectors so as to create an image on a dome surface some 2 or 3 metres away from the observer. The problems with projector systems is that those offering good resolution and brightness are expensive and they generally require careful setting up to achieve a matching of projected images in order to blend the edges to an acceptable standard. In addition special geometric correction techniques are often necessary where projection onto a curved surface is required.

A further drawback of the systems described above is that they lack depth of field. In real life circumstances the pilot's view outside the cockpit is almost always focused on points located at a considerable distance away. In order to provide a more lifelike image having a feeling of depth it is known to collimate the image which is presented to the observer. In this way an image at, or near, infinity is created. The term "collimated" is hereinafter defined as having an image distance between infinity and 10 metres.

It is known to provide a collimated image having a wide field of view by using a concave mirror, usually hemispherical in form. In such a system a plurality of CRT's are located outside the field of view and arranged to project (sub)images onto one or more semi-reflecting mirrors, alternatively known as a beamsplitters. The beamsplitters are located within the field of view and reflect the images onto the mirror, the mirror being located behind the beamsplitter in relation to the observer. This mirror acts to mosaic, collimate and reflect the (sub)images or "tiles" from each CRT back through the beamsplitters (uninterrupted) to the observer, to form a large "single" collimated matched image made up of the discrete images or "tiles".

Although the above technique offers the best display system many for flight simulators applications so far, there are still difficulties in placing more than a small number of CRT images together in order to increase the total field of vision. Due to their overall size and weight it is impossible to arrange the CRT's in the manner required. Although it is possible to arrange the CRT/beamsplitter modules in a row, it is not possible to stack them in a 3 by 3 matrix, for example. The technique is therefore not normally possible where a very large field of view is required and the realism provided by such systems is therefor somewhat limited.

It is an object of the invention to provide a display system suited to all types of simulation where a collimated, large field of view is required. It is further an object to provide a display system having a compact and rugged construction, and which requires little setting up.

The invention provides a display system comprising a plurality of display units, at least one of which comprises a beamsplitter, display panel and a concave mirror, arranged such that the beamsplitter reflects light from the display panel onto the mirror, the mirror reflecting and collimating such light to form a visible image viewable to an observer, characterised in that at least one display unit is flat and thus can be orientated such that only its edge can be seen by the observer.

The invention further provides a display system comprising a plurality of display units, at least one of which comprises a beamsplitter, display panel and a concave mirror, arranged such that the beamsplitter reflects light from the display panel onto the mirror, the mirror reflecting and collimating light to form a visible image to an observer, characterised in that at least one display unit is flat and can thus be oriented such that only its edge can be seen the observer.

The invention permits an image to be provided to an observer having a large, virtually uninterrupted, field of view and a focus distance close to infinity, thereby creating a feeling of depth. The invention also provides for high resolution, colour images and a rugged construction due to compact nature of the arrangement. Further advantages are that the field of view can be configured in various shapes.. The system also allows higher resolution over the complete field of view compared to prior art projection systems.

A single large concave mirror is preferred which makes it simpler to mosaic the images (tiles) together.

Preferably the line of sight between at least one of the panels and the observer is substantially in the same plane as the panel. Only the edge of the panels is observable and the panels therefore only slightly block the field of view.

Preferably the flat panel display is an LCD display. The advantage of using LCD panels is that they do not suffer from drift problems as is the case with CRT's. This is especially important to flight simulators where, for realism, high accuracy is required and also because solving drift problems is an extremely difficult and complex task. Furthermore, although the system according to the invention may require some accurate jigging during manufacture, it would require no further setting up because the LCD display can be defined digitally.

The invention will now be described by way of example only with reference to the following figures of which:

Figure 1 shows a sectional view of a prior art display system.

Figure 2 shows a non-sectional view of the display system of figure 1

Figure 3 shows a display system according to one embodiment of the invention utilising a single common concave mirror

Figure 4 shows a preferred embodiment of the invention comprising a number of units each comprising a flat display panel, beam splitter and concave mirror configure so that the mirrors are mosaiced together effectively creating a single mirror allowing a continuous field of view.

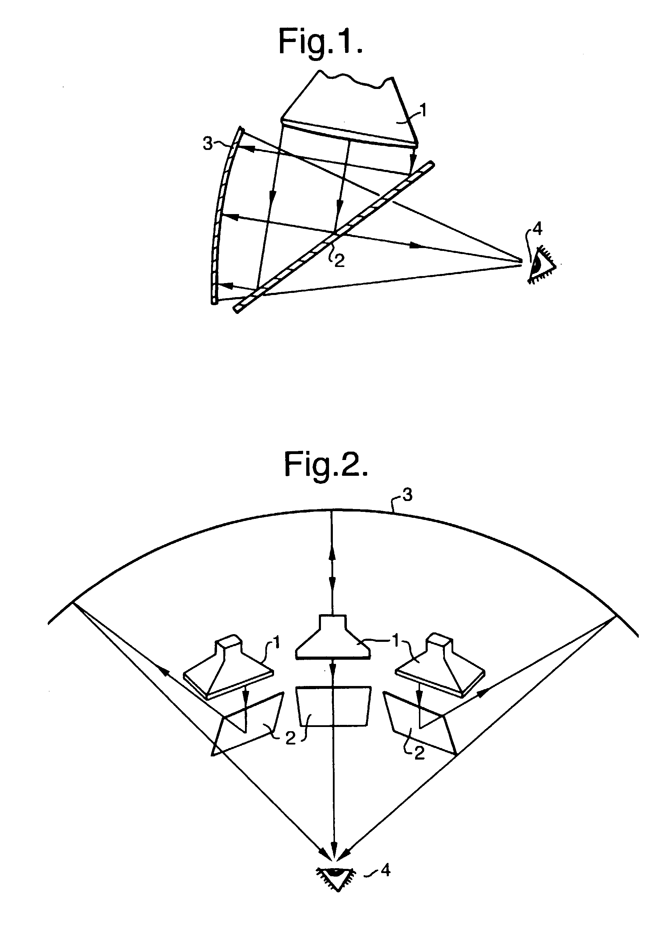

Fig 1 shows a section through a prior art CRT monitor based collimation display system comprising a CRT 1, located outside the field of view. This displays an image reflected from a beamsplitter 2, arranged at 45° to the vertical, onto a concave collimating mirror 3. The collimated image is reflected back uninterrupted through the beamsplitter to the observer's eye point 4. In a usual arrangement one of these such modules is located directly in front of the observer and one module each on both sides, both inclined towards the observer; operating a number of these mated together in a single row can result in a large horizontal field of view as shown by figure 2. However, it is not possible to easily stack them in the vertical plane without significant changes to the overall layout of simulator cockpit controls; the CRT monitors would obviously obscure much of the mirror surface, and therefore the field of view available to the observer. Further high dimensional matrices (e.g. a 3 x 3 matrix) are impossible to construct without serious obstruction.

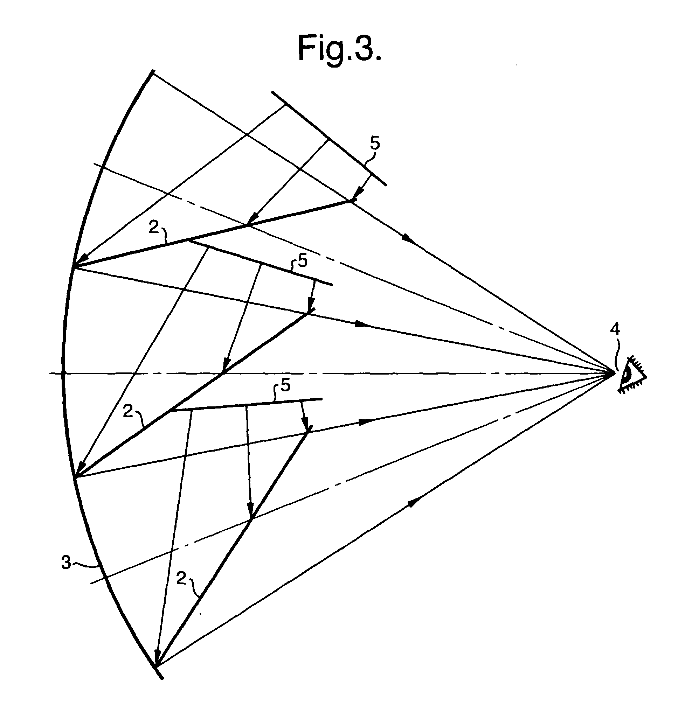

Fig 3 shows a plan view of one embodiment of the invention comprising a number of display panels 5 aligned with their planes pointing in the same direction as the line of sight between the panel and the observer. Associated with each LCD screen is a beamsplitter 2. A concave, hemispherical collimating mirror 3 is also provided as before. The beamsplitters are sized and positioned so that they reflect the LCD image onto the mirror such that the resulting reflected image is reflected towards the observer. The image from each LCD panel is reflected by the beamsplitters onto the mirror at the correct location such that images (or "tiles") reflected from the mirror to the observer form a matched mosaiced image covering a wide field of view in the horizontal plane comprising a number of discrete images. Although this image is reflected to the observer via the beamsplitter, the beamsplitter properties are such that they allow uninterrupted propagation of this light from the mirror to the observer. Further sets of LCD panels/beamsplitter modules may be stacked vertically, thus providing a 2-dimensional array. Essentially the CRT monitors of the prior art system are now replaced by the thin LCD panels.

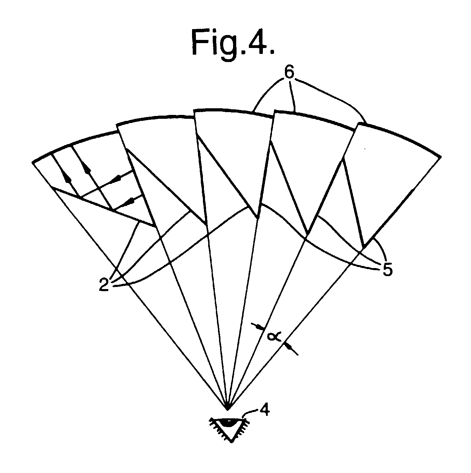

Figure 4 shows a preferred embodiment of the invention comprising a number of display units each comprising a flat display panel 5, beam splitter 2 and individual concave mirror 6, configured so that the mirrors are mosaiced to effectively create a "single" mirror allowing a continuous field of view. The modularity is such that the mirror of each unit is arranged as a vertically sliced segment of a sphere. In the example shown in the figure each flat display panel is advantageously aligned coincident with the plane so as to form the side of a segment. In this way the thin edge of a display panel does not intersect the view from each mirror (or tile of the mosaiced image).

The horizontal field of view can be increased by adding further segments up to a full 360 degrees. Each segment angle, a, preferably does not cover more than 60 degrees so that the resolution and quality of the image is maintained. The top cap area which makes up the sphere, say of 30 degrees to the zenith, may be covered by a separate arrangement of mosaiced units as described above.

Thus it is possible to matrix many similar panel/beamsplitter assemblies, both horizontally and vertically, over the surface of a concave mirror to make up a large field of view. Small areas of "lost field" of view will be present due, not only to the intrusion of the edge of the LCD panels, but also from the mounting points that are be necessary to retain the beamsplitters and LCD panels within the visual area of the concave mirror surface. However, as all these have a short focus distance compared to the displayed scene which has a focus distance close to infinity and thus not readily apparent to the observer. A small degree of head movement will enable the observer to see around these small obtrusions.

The actual positioning of each panel/beamsplitter assembly would normally be such that a continuous field of view both horizontally and vertically is achieved (with a small overlap between each 'tile' to avoid gaps seen when the head position moves away from the datum). In other words the panels are so aligned so as to present only a small area to the observer.

The number, shape and arrangement of the display panels can be varied according to the invention to provide a bespoke display system. An example of the number of panels require (using identical rectangular panels) is given below:

To fill a hemisphere requires 2Π Steradians (square radians), or 20,627 square degrees.

For a field of view of each panel of 28 x 21 degrees, then a hemisphere would require :-

$$20627/(28 \times 21) = 35 \text{ panels.}$$

If each panel was driven with a video signal of resolution of 640 x 480, then the display resolution would be :-

$$28 \times 60 / 640 = 2.63 \text{ arcmin/pixel or } 5.25 \text{ arcmin/olp.}$$

$$(\text{olp} = \text{optical line pair})$$

It would be an advantage if the optical design could be made symmetrical over a 180° hemisphere such that any additional horizontal field of view beyond +90 degrees can then be achieved by repeating the front hemisphere layout (or part of it). In addition, the straight ahead view is preferably centred on an panel 'tile'.

An alternative number of options are available which all fall under the scope of the invention, Using non rectangular panels would enable each "tile" image to give an improved match to the area required to form a section of a sphere. Further it is not a necessity that a single reflecting concave mirror be provided. Individual panel/beamsplitter/mirror assemblies could be abutted together to form specific display arrangements. Moreover the concave mirrors may be located at differing distances from the observer and be of varying focal lengths to suit the application.

As far as the control of the LCD images is concerned the scene is spherically mapped onto the flat surface of each LCD 'tile'. To control the potentially large number of LCD panels a number of options are available. All LCD panels may be driven continuously, each by its own signal from a single image generator. However where a large number say 30 or 40 LCD panels are required, around 4 or 5 image generators are required (a current image generator can output at least 8 video channels of resolution (640 x 480 pixels)).

The direction of the head may be used to determine where the display information is required, and the suitable panels made 'live'. In addition, the panels could be operated in high resolution or lower resolution mode depending on where they are situated with respect to the centre of gaze angle. A known technique which takes advantage of the progressive fall off of eye acuity with angle from centre of gaze is utilised on present simulators by slewing projection optics to move the scene around a dome surface. The advantage of using it with an electronic panel display system according to the invention is that no mechanical operations are needed, only electronic signal manipulation.

A combination of the above techniques would possibly offer the preferred option. This could involve driving all the panels in low resolution mode continuously, except for those that are close to the centre of gaze, as determined by the head movement detector, and these would contain high resolution information from a separate image generator . The advantage would be that the observer would have a good peripheral field of view at all times. A further method of driving the displays would be to scan a number of them as a single display, rather than each one separately a technique which offers advantages in interfacing to the image generator to implement some of the above display methods.

## Claims

1. A display system comprising a plurality of display units, at least one of which comprises a beamsplitter, display panel and a concave mirror, arranged such that the beamsplitter reflects light from the display panel onto the mirror, the mirror reflecting and collimating such light to form a visible image to an observer, characterised in that at least one display unit is flat and can thus be oriented such that only its edge can be seen the observer.

2. A display system as claimed in claim 1 so arranged that light from each flat panel is reflected from one or more concave mirrors to form a mosaiced coherent image having an almost a virtually uninterrupted field of view.

3. A display system as claimed in claim 2 wherein a single common concave mirror is utilised for collimating and reflecting light from a plurality of flat panels.

4. A display system as claimed in any preceding claim wherein the line of sight between at least one of the panels and the observer is substantially in the same plane as the panel.

5. A display system as claimed in any preceding claim wherein said flat panel display is an LCD display.

6. A display system as claimed in claims 2 to 5 having means to operate at least one of the panels at a higher resolution than other panels.

7. A display system as claimed in claim 6 having means to determine the direction of gaze of the observer, and wherein the panels operating at a high resolution are selected according to the direction of gaze.

8. A display system substantially as hereinbefore described with reference to the drawings.

# Fig.1.

# Fig.2.

# Fig.3.

# Fig.4.

European Patent Office

# EUROPEAN SEARCH REPORT

Application Number

EP 98 20 1745

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US 3 659 920 A (MCGLASSON FRANK WILLIAM) 2 May 1972 * column 5, line 74 - column 6, line 39; figures 6,7 * | 1,8 | G09B9/32 G02B27/18 |
| A | * figures 6,7 * | 2 | |
| Y | EP 0 710 865 A (KAISER ELECTRO OPTICS INC) 8 May 1996 * column 6, line 7 - line 47; figure 1B * | 1,8 | |
| A | * column 3, line 5 * | 5 | |
| A | WO 95 21396 A (MACK WOLFGANG ADAM JR ;RALLISON DENNIS RICHARD (US); CONNER ARLIE) 10 August 1995 * page 2, line 30 - page 3, line 7 * * page 4, line 5 - line 29; figure 1 * | 1,5 | |
| A | DOBSON S J: "AN ACHROMATIC COLLIMATOR FOR A MULTI-WINDOW FLIGHT SIMULATOR" OPTICS AND LASER TECHNOLOGY, vol. 22, no. 5, 1 October 1990, pages 323-328, XP000171806 * figure 1 * | 1 | |

TECHNICAL FIELDS SEARCHED (Int.Cl.6)

G09B
G02B

The present search report has been drawn up for all claims

| Place of search | Date of completion of the search | Examiner |
|---|---|---|
| THE HAGUE | 8 September 1998 | Hervé, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)